(19) Europäisches Patentamt
European Patent Office
Office européen des brevets

(11) **EP 2 124 593 B1**

(12) **EUROPEAN PATENT SPECIFICATION**

(45) Date of publication and mention
of the grant of the patent:
**01.08.2012 Bulletin 2012/31**

(51) Int Cl.:
*A23D 7/005* $^{(2006.01)}$     *A23L 1/00* $^{(2006.01)}$
*A23G 9/20* $^{(2006.01)}$

(21) Application number: **08717485.0**

(22) Date of filing: **06.03.2008**

(86) International application number:
**PCT/EP2008/052738**

(87) International publication number:
**WO 2008/110502 (18.09.2008 Gazette 2008/38)**

(54) **AERATABLE AND AERATED PRODUCTS**

SCHÄUMBARE UND GESCHÄUMTE PRODUKTE

PRODUITS POUVANT ÊTRE AÉRÉS ET PRODUITS AÉRÉS

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **14.03.2007 EP 07104154**

(43) Date of publication of application:
**02.12.2009 Bulletin 2009/49**

(73) Proprietors:
• **Unilever PLC
London EC4Y 0DY (GB)**
Designated Contracting States:
**CY GB IE MT**
• **Unilever N.V.
3013 AL Rotterdam (NL)**
Designated Contracting States:
**AT BE BG CH CZ DE DK EE ES FI FR GR HR HU
IS IT LI LT LU LV MC NL NO PL PT RO SE SI SK TR**

(72) Inventors:
• **BONGAERTS, Jeroen, Henricus, Hubertus
Bedford Bedfordshire MK44 1LQ (GB)**
• **HOUSTON, Philip, Alan
Bedford Bedfordshire MK44 1LQ (GB)**
• **STOKES, Jason, Richard
Bedford Bedfordshire MK44 1LQ (GB)**

(74) Representative: **Acham, Nicholas Clive
Unilever Patent Group
Colworth House
Sharnbrook
Bedford
MK44 1LQ (GB)**

(56) References cited:
WO-A-98/31236     US-A1- 2002 103 103
US-A1- 2002 197 355     US-A1- 2004 265 468

## Description

### Field of the invention

The present invention relates to an aerated product that comprises water, liquid oils, salt and sugar esters, as well as to food products comprising such an aerated product as well as a method to produce such an aerated product.

### Background to the invention

In aerated products such as ice cream, whipped cream, mousse, toppings and aerated cake fillings, the air bubbles are at least in part stabilized by emulsified fat. Conventionally, the fat is substantially solid at the processing and storage temperatures, since liquid fat destabilizes foams. For example ice cream mixes in which greater than about 50% of the fat is liquid at the processing temperature cannot be aerated to a high quality ice cream by conventional routes. Similarly, cream in which the fat is liquid cannot be whipped; this is why cookery books say that you should chill cream before whipping it. Furthermore, to the extent that such products can be aerated the foams have poor stability.

Solid fats contain a high proportion of saturated fatty acids, for example dairy fat (60-65%) or coconut oil (90%). Health-conscious consumers are now looking for products which have all the properties of the traditional products but which are healthier. One way of achieving this would be to replace the saturated fats with unsaturated fats. However, unsaturated fats contain a substantial proportion of liquid fat at typical processing and / or storage temperatures. Thus it is not possible simply to replace the saturated fats with unsaturated fats.

There have been previous attempts to produce aerated emulsions, such as whipped cream and ice cream, using fats with higher liquid contents. WO 94 / 017672 discloses whippable, water-continuous fat emulsions comprising 10-40 weight-% (wt %) of a fat mixture obtained by blending two fats, such as sunflower oil and palm mid-fraction. A certain amount of solid fat was still found necessary. EP-A 1 212 947 discloses ice creams comprising a fat phase and having overrun of at least 90%, characterised in that at least 50 w/w % of the fat phase is liquid at -5°C. A particular apparatus, in the form of an aeration means that displaces less than 40% of the internal volume of the freezer barrel, was required. Thus there remains a need to provide emulsions containing high levels of liquid fats which aerate well using conventional equipment and which have good foam stability.

Surprisingly, it has been found that an aerated product comprising water and at least one liquid oil can be formed, when the aerated product comprises

    (i) at least one salt; and
    (ii) at least one sucrose ester;

wherein the aerated product comprises no more than 5% by weight of the aerated product of sucrose ester;
wherein the liquid oil is liquid at 20°C/1 atmosphere;
wherein the aerated product is a food product,
wherein the liquid oil comprises less than 30%, preferably less than 25%, most preferably less than 20% by weight of the liquid oil of saturated fatty acid,
wherein the product is in the form of an oil-in-water emulsion, and
wherein the at least one sucrose ester dissolves in water at 80 degrees centigrade.

Beside the fact that a foam with liquid oil can be formed, a foam according to the present invention also has good foam properties, such as good overrun and a good stability (it is stable for days at ambient temperature).

The stability is determined by measuring the height of the foam. It is given in percentages, which means that 100% means the height has not changed and for examples 50 % means that the height of the foam is half as it was at the start of the measurement.

### Aeration and overrun

The term "aerated" means that gas has been intentionally incorporated into the composition, for example by mechanical means. The term "aeratable" means that gas can be incorporated into the composition, for example by whipping. The gas can be any gas, but is preferably, particularly in the context of food products, a food-grade gas such as air, nitrogen, nitrous oxide, or carbon dioxide.

The extent of aeration is defined in terms of "overrun". In the context of the present invention, %overrun is defined in volume terms as:

$$\%overrun = ((volume\ of\ aerated\ product - volume\ of\ mix)\ /\ volume\ of\ mix)\ x\ 100\%$$

where the volumes are the volumes of a fixed mass of product / mix, respectively.

The aerated product according to the present invention is stable, which means that it keeps its form as well as its properties over time. Foam stability is defined in the context of the present invention as the percentage of the overrun that remains at time T after aeration of the product at time T = 0

$$\%Stability = (Overrun\ (T)/Overrun\ (0))\ x\ 100\%.$$

Aeratable products within the scope of this invention comprise water and an emulsified fat phase Such compositions are premixes for any kind of aerated products. It includes premixes for aerated desserts, mousses and frozen confections, and whipping cream or non-dairy cream, as well as premixes for the home care use, such as premixes for foamy soap products as wells as premixes for the personal care products such as premixes for razor foams or foamy soap products. All these premixes are subsequently aerated to form the final product.

By a food product is also meant an aeratable product which, where aerated, is a food product. Likewise by a non-food product is meant an aeratable product which, when aerated, is a non-food product.

**Water**

The aeratable product according to the present invention comprises water. The water content can vary depending on the use of the aerated product.

The aerated product can contain up to 99.5 wt-% of water, depending on the level of oil, salt and other ingredients added to the formulation. The water content can be 5 - 99.5 wt-%, based on the total weight of the aerated product, preferably 20 - 95 wt-% of water.

Oil

The oil can be any kind of liquid oil (mixtures as well). By the term liquid it is meant that the oil is liquid at the processing temperature and/or the storage temperature, and/or the temperature of the product when consumed or used. The oil is liquid at room temperature (20°C) or when it is chilled (4°C) or when it is frozen (-5°C).

Depending on the use of the aerated products, it is preferred that the used oils are nontoxic.

The oil must be edible that means harmless to the animal and/or human body.

Suitable oils can be from vegetable or animal sources.

Preferred oils are vegetable oils, like coconut oil, palm oil, corn oil, cottonseed oil, canola oil, olive oil, rapeseed oil, peanut oil, ground nut oil, safflower oil, sesame oil, soybean oil, sunflower oil, almond oil, cashew oil, hazelnut oil, macadamia oil, pecan oil, pistachio oil, walnut oil, acai oil, blackcurrant seed oil, borage seed oil, evening primrose oil, carob seed pods, amaranth oil, apricot oil, argan oil, avocado oil, babassu oil, ben oil, carob pod oil (algaroba oil), coriander seed oil, false flax oil (made of the seeds of camelina sativa), coriander seeds, hemp oil, kapok seed oil, meadowfoam seed oil, mustard oil (pressed), okra seed oil (hibiscus seed oil), perilla seed oil, pine seed oil, poppyseed oil, prune kernel oil, pumpkin seed oil, quinoa oil, ramtil oil, rice bran oil, tea oil (camellia oil), thistle oil, wheat germ oil, castor oil, radish oil, ramtil oil and tung oil.

Animal oils, like tallow oil and fish oil (for example cod liver oil).

Preferred oils are sunflower oil, olive oil, soybean oil, rapeseed oil, as well as mixtures fractions thereof.

The present invention also relates to an aerated product comprises at least 0.01 wt-%, based on the total weight of the aerated product, of at least one liquid oil.

Preferably, the aerated product comprises 0.01 wt-% to 80 wt-%, based on the total weight of the aerated product, of at least one liquid oil, more preferably 0.01 to 75 wt-%, especially preferred 0.01 to 70 wt-%, very especially preferred 0.05 to 70 wt-%.

**Salt**

The salt can be any kind of salt (mixtures as well). The salt can comprise inorganic, organic, monoatomic as well as polyatomic ions.

Depending on the use of the aerated products, it is preferred that the used salts are nontoxic.

In case that the aerated product is used in a food product the salt must be edible that means harmless to the animal and/or human body.

Preferably, the salts are inorganic salt, more preferably inorganic salts comprising halogen anions or phosphate ions. Especially alkali or earth alkali metal salts. Very suitable are NaCl, KCI and $Na_3PO_4$.

The aerated product according to the present invention comprises at least 0.005 wt-%, based on the total weight of the aeratable or aerated product, of at least one salt.

The upper limit of the salt is usually given by the application. That means if the aerated product is used in a food product, the salt content should not be too high, because of taste reason as well as for health reason.

Usually the salt concentration goes from 0.005 to 5 wt-%.

An embodiment of the present invention relates to an aerated product comprising 0.005 to 5 wt-% salt, based on the total weight of the aerated product.

A preferred embodiment of the present invention relates to an aerated product comprising 0.005 to 2 wt-% salt, more preferred 0.05 to 2wt-%, based on the total weight of the aerated product.

**Sucrose ester**

Sugar ester (also known as sucrose fatty acid ester) can be characterised by their hydrophilic-lypophilic (HLB) balance and their composition of mono- to octa- fatty acid esters.

The current invention relates to all types of sucrose esters (mixtures as well). Preferably, the invention relates to sucrose stearate, sucrose palmitate and mixtures thereof.

Suitable are also mono-, di-esters and poly-esters of sucrose with higher fatty acids such as lauric-, myristic-, palmitic-, stearic- and oleic tallow acid.

The sucrose esters are any kind of esterified sucrose as well as esterified sugar alcohols.

Suitable are sucrose polyester of fatty acids.

Commonly known and commercially available sucrose esters are for example the ones from the Sisterna® range.

The aerated product according to the present invention comprises at least 0.05 wt-%, based on the total weight of the aerated product, of at least one sucrose ester.

Preferably, the amount goes from 0.05 to 2 wt-%, based on the total weight of the aerated product.

**Further ingredients**

Furthermore, the aerated product can comprise any kind of ingredient, which is required and/or desired to make a food product.

Commonly used ingredients for food products are sugar, non-liquid fat/oils, emulsifiers, flavourings, colouring agents, preservatives, proteins such as dairy proteins or soy protein; sugars e.g. sucrose, fructose, dextrose, lactose, corn syrups, sugar alcohols; fruit or vegetable purees, extracts, pieces or juice; stabilisers or thickeners, such as polysaccharides, e.g. locust bean gum, guar gum, carrageenan, microcrystalline cellulose; and inclusions such as chocolate, caramel, fudge, biscuit or nuts. The compositions may include all of the remaining ingredients required to make the food product such that the composition is ready to be processed, i.e. aerated, to form an aerated food product of the invention.

The amount of these ingredients can vary a lot. Usually they are present in amount of less than 50 wt-%, based on the total weight of the aeratable product.

Consequently, the they are present in amount of less than 50 wt-%, based on the total weight of the aerated product.

Therefore an embodiment of the present invention relates to an aerated product comprising

5 - 99.5 wt-%, based on the total weight of the aerated product, of water and

0.01 - 80 wt-%, based on the total weight of the aerated product, of at least one liquid oil, and

0.005 - 4.5 wt-%, based on the total weight of the aerated product, of at least one salt, and

0.5 - 2 wt-%, based on the total weight of the aerated product, of at least one sucrose ester, and optionally

up to 50 wt-%, based on the total weight of the aerate product, of at least one further ingredient.

The aerated product has an overrun of at least 10%. The aerated product has an overrun of less than 400%.

The aerated composition can be used in food products. The food products can be stable at room temperature. But it can also be a chilled aerated food product or a frozen aerated product.

**Overrun**

The amount of overrun present in the composition will vary depending on the desired product characteristics. The overrun is at least 10%, preferably at least 25 or 50%. Preferably the amount of overrun is less than 400%, more preferably less than 300 or 200%. For frozen aerated confections, the overrun is most preferably from 70 to 150%. For whipped cream or non-dairy cream and related products, the overrun is most preferably from 100 to 160%.

The aerated product according to the present invention can be produced by commonly known procedures.

A further embodiment of the present invention relates to a method of producing an aerated product comprising water, at least one liquid oil, at least one salt and at least one sucrose ester.

A preferred method for producing an aerated product is as follows: the oil, sucrose ester and aqueous phase are emulsified in the absence of salt using equipment known to the art. After emulsification, salt is added and the foam is created by whipping the system using equipment known to the art.

The present invention will now be described further with reference to the following nonlimiting examples. If not otherwise stated the percentages are based on weight and the temperature is given in degree Celsius.

**Experiments**

Preparation of the formulation, aeration and stability experiments are performed at room temperature (ca. 22°C), unless otherwise stated.

Unless otherwise stated, the Sisterna sucrose esters are dissolved in water at 80°C, as recommended by the manufacturer and allowed to cool to room temperature.

Sisterna sucrose esters are a mixture of sucrose palmitate and sucrose stearate, where the number in SPXX indicates the percentage of monoester in the system. All remaining ingredients except the salt are then added.

Then, unless otherwise stated, the foams are created by first emulsifying the oil in the water phase in the absence of salt using a Silverson mixer for 60 seconds with a L4R fine mesh at 60% of the maximum speed. Salt was added immediately after emulsification and the system was aerated using a hand-held whipping device (SmartCafe™). Other means, known to the art, may be used as well.

After creation of the foam, it is stored at room temperature, unless otherwise stated.

The foam height is measured 1 day and 1 week after aeration by visual inspection of the foam and reading of the foam height using a ruler.

**Examples 1 - 5:** Variation of the salt concentration

The following examples show the effect of the variation of the salt concentration. As salt NaCl is used

| Experiment No. | 1 | 2 | 3 | 4 | 5 |
|---|---|---|---|---|---|
| Rapeseed oil [wt-%] | 0.5 | 0.5 | 0.5 | 0.5 | 0.5 |
| Sisterna SP70 (sucrose ester)[wt-%] | 1 | 1 | 1 | 1 | 1 |
| **Salt NaCl [wt-%]** | **0** | **0.25** | **0.5** | **1** | **2** |
| Water[wt-%] | 93.5 | 93.25 | 93 | 92.5 | 91.5 |
| White sugar [wt-%] | 5 | 5 | 5 | 5 | 5 |
| **Overrun [%]** | **15** | **106** | **131** | **140** | **106** |
| **Stability after 1 day [%]** | **0** | **100** | **100** | **100** | **100** |
| **Stability after 1 week [%]** | **0** | **100** | **96.1** | **83.3** | **100** |

A good overrun (>100%) is obtained for salt concentrations between 0.25 and 2%.

A good foam stability (90-100% after one day) is obtained for the same concentration range.

The comparative Example 1, wherein no salt is present, does not foam very well and has no stability.

**Examples 6 - 13:** Variation of the liquid oil concentration

The following examples show the effect of the variation of the liquid oil concentration. As liquid oil rapeseed oil (RO) is used

| Experiment No. | 6 | 7 | 8 | 9 | 10 | 11 | 12 | 13 |
|---|---|---|---|---|---|---|---|---|
| **RO [wt-%]** | **0** | **0.05** | **0.5** | **5** | **10** | **20** | **30** | **38** |
| SP70 [wt-%] | 1 | 1 | 1 | 1 | 1 | 1 | 1 | 1 |
| Salt NACl [wt-%] | 0.5 | 0.5 | 0.5 | 0.5 | 0.5 | 0.5 | 0.5 | 0.5 |
| Water [wt-%] | 93.5 | 93.45 | 93 | 88.5 | 83.5 | 73.5 | 63.5 | 65.5 |
| White sugar[wt-%] | 5 | 5 | 5 | 5 | 5 | 5 | 5 | 5 |
| **Overrun [%]** | **6** | **134** | **131** | **67** | **106** | **76** | **84** | **94** |
| **Stability after 1 day [%]** | **0** | **100** | **100** | **100** | **100** | **100** | **100** | **100** |
| **Stability after 1 week [%]** | **0** | **100** | **96.1** | **100** | **100** | **100** | **95** | **89.7** |

Good foam stability and overrun is obtained in Examples 7 - 13 (RO concentrations between 0.05 and 38 wt-%).

Comparative Example 6 shows that the presence of oil is mandatory.

**Examples 14 - 15:** Variation of sucrose ester (SE) concentration

The following examples show the effect of the sucrose ester (SE) concentration. As a sucrose ester Sisterna® SP70 is used

| Experiment No. | 14 | 15 | 10 |
|---|---|---|---|
| Rapeseed oil [wt-%] | 10 | 10 | 10 |
| **SE - SP70 [wt-%]** | **0.2** | **0.5** | **1** |
| Salt NaCl [wt-%] | 0.5 | 0.5 | 0.5 |
| Water [wt-%] | 84.3 | 84 | 83.5 |
| White sugar [wt-%] | 5 | 5 | 5 |
| **Overrun [%]** | **38** | **193** | **106** |
| **Stability after 1 day [%]** | **91.7** | **74.1** | **100** |

Good stability and overrun of the foams according to the present invention are obtained with a low amount of sucrose ester.

**Examples 16 - 18:** Variation of sucrose ester types

The following examples show the effect of the sugar ester types. The following sugar ester types are used:

| Sucrose ester |
|---|
| Sisterna SP30 |
| Sisterna SP50 |
| Sisterna SP70 |

| Experiment No. | 16 | 17 | 18 |
|---|---|---|---|
| Rapeseed oil [wt-%] | 30 | 30 | 30 |
| **Sucrose ester [1 wt-%]** | **SP30** | **SP50** | **SP70** |
| Salt NaCl [wt-%] | 0.5 | 0.5 | 0.5 |

(continued)

| Experiment No. | 16 | 17 | 18 |
|---|---|---|---|
| Water [wt-%] | 63.5 | 63.5 | 63.5 |
| White sugar [wt-%] | 5 | 5 | 5 |
| **Overrun [%]** | **45** | **114** | **84** |
| **Stability after 1 day [%]** | **100** | **100** | **100** |
| **Stability after 1 week [%]** | **100** | **100** | **95** |

A high overrun and foam stability is obtained for the sucrose stearate/sucrose palmitate mixtures SP30, SP50, SP70.

**Examples 19 - 20:** Variation of oil melting temperature (comparative)

Good foam height and stability is achieved both for room temperature liquid fat (rapeseed oil) and for solid fat (palm oil). The palm oil emulsion was prepared at a temperature T > 35°C and aerated at T > 35 °C. This result demonstrates that the current invention is able to stabilise foams using liquid oils (which are anti-foaming agents) as well as solid oils.

m.p. = melting point

| Experiment No. | 19 | 20 |
|---|---|---|
| **Oil [wt-%]** | **30% RO (m.p = -10°C)** | **30% palm oil m.p = 35°C** |
| Sisterna SP70 [wt-%] | 1 | 1 |
| Salt NaCl [wt-%] | 0.5 | 0.5 |
| Water [wt-%] | 63.5 | 63.5 |
| White sugar [wt-%] | 5 | 5 |
| **Overrun [%]** | **84** | **70** |
| **Stability after 1 day [%]** | **100** | **100** |
| **Stability after 1 week [%]** | **95** | **100** |

**Examples 21 - 23:** Variation of the salt type

(Note: The SE was dissolved at room temperature in these experiments)

Good stability and high overrun is achieved for NaCl, KCl and $Na_3PO_4$.

| Experiment No. | 21 | 22 | 23 |
|---|---|---|---|
| Rapeseed oil [wt-%] | 0.5 | 0.5 | 0.5 |
| Sisterna SP70 [wt-%] | 1 | 1 | 1 |
| **Salt, 0.25% [wt-%]** | **NaCl** | **KCl** | **$Na_3PO_4$** |
| Water [wt-%] | 93.25 | 93.25 | 93.25 |
| White sugar [wt-%] | 5 | 5 | 5 |
| **Overrun [%]** | **314** | **319** | **335** |
| **Stability after 1 day [%]** | **97.8** | **100** | **85.1** |
| **Stability after 1 week [%]** | **78** | **61.6** | **85.1** |

**Examples 24 - 25:** Addition of a thickener

(Note: The SE was dissolved at room temperature in these experiments)

Adding a thickener (0.1% Xanthan Gum) produces a good foam, with slightly reduced overrun and foam stability.

| Experiment No. | 24 | 25 |
|---|---|---|
| Rapeseed oil [wt-%] | 0.5 | 0.5 |
| Sisterna SP70 [wt-%] | 1 | 1 |
| Salt NaCl [wt-%] | 0.25 | 0.25 |
| Water [wt-%] | 93.15 | 93.25 |
| White sugar [wt-%] | 5 | 5 |
| **Thickener Xanthan Gum [wt-%]** | **0.1** | **0** |
| **Overrun [%]** | **207** | **314** |
| **Stability after 1 day [%]** | **98.4** | **97.8** |
| **Stability after 1 week [%]** | **0** | **78** |

**Examples 26 - 31:** Variation of the type of oil

(Note: The SE was dissolved at room temperature in these experiments)

Good foam foaming capability and one-day foam stability is obtained for all oils, including the silicone oils, which are known in the art to be anti-foaming agents.

RO = Rapeseed oil
SFO = Sunflower oil
DC345 = Low-viscosity silicone oil (Dow Corning)
MCT = Medium-chain triglyceride (caprylic/capric triglyceride (Myritol (RTM) 318 (Cognis)))
Si-oil = 100 mPa.s silicone oil

| Experiment No. | 26 | 27 | 28 | 29 | 30 | 31 |
|---|---|---|---|---|---|---|
| **Oil** | **0.5% RO** | **0.5% SFO** | **0.5% DC 345** | **5% DC 345** | **0.5% MCT** | **0.5% Si-oil** |
| Sisterna SP70 [wt-%] | 1 | 1 | 1 | 1 | 1 | 1 |
| Salt NaCl [wt-%] | 0.25 | 0.25 | 0.25 | 0.25 | 0.25 | 0.25 |
| MilliQ Water [wt-%] | 93.25 | 93.25 | 93.25 | 88.75 | 93.25 | 93.25 |
| White sugar [wt-%] | 5 | 5 | 5 | 5 | 5 | 5 |
| **Overrun [%]** | **314** | **286** | **257** | **157** | **77** | **329** |
| **Stability after 1 day [%]** | **97.8** | **100** | **100** | **100** | **100** | **91.3** |
| **Stability after 1 week [%]** | **78** | **85** | **0** | **23.6** | **100** | **4.3** |

**Examples 32 - 36:** Variation of the sucrose ester concentration, dissolved at RT

For SE dissolved at room temperature (RT), concentrations above 0.5% yield good foam creation and stability

| Experiment No. | 32 | 33 | 34 | 35 | 36 |
|---|---|---|---|---|---|
| Rapeseed oil [wt-%] | 0.5 | 0.5 | 0.5 | 0.5 | 0.5 |

(continued)

| Experiment No. | 32 | 33 | 34 | 35 | 36 |
|---|---|---|---|---|---|
| SP70 [wt-%] | 0.01 | 0.1 | 0.5 | 1 | 2 |
| Salt NaCl [wt-%] | 0.25 | 0.25 | 0.25 | 0.25 | 0.25 |
| Water [wt-%] | 94.24 | 94.15 | 93.75 | 93.25 | 92.25 |
| White sugar [wt-%] | 5 | 5 | 5 | 5 | 5 |
| Overrun [%] | 0 (no foam) | 29 | 213 | 314 | 244 |
| Stability after 1 day [%] | 0 | 0 | 97.1 | 97.8 | 97.4 |
| Stability after 1 week [%] | 0 | 0 | 26.5 | 78 | 55.1 |

## Example 37: Ice cream

| Ingredient | Weight (%) |
|---|---|
| Skimmed milk powder | 10 |
| Sucrose | 25 |
| Sunflower oil | 7 |
| Xanthum gum | 0.2 |
| Sisterna SP70 | 1 |
| Sodium chloride | 0.5 |
| Distilled water | balance |

The aforementioned ingredients were combined to produce an ice cream using a conventional method known in the art. The overrun was 100%.

## Example 38: Milk shake

| Ingredient | Weight (%) |
|---|---|
| Skimmed milk powder [a] | 10 |
| Organic hot chocolate powder | 8 |
| Sucrose | 1 |
| Sunflower oil | 2 |
| Xanthum gum | 0.4 |
| Sisterria SP70[b] | 1.25 |
| Distilled water | balance |
| [a] salts such as sodium chloride and potassium chloride are naturally present in skimmed milk powder [b] as 4% w/w solution in distilled water | |

The aqueous solution of Sisterna SP70 was prepared at 80°C. The above-mentioned ingredients were combined at room temperature by gentle stirring, then foamed with an electric hand mixer and finally aerated to 50% overrun with an Aerolatte steam-free milk frother thereby to produce a milk shake.

**Claims**

1. An aerated product comprising water and at least one liquid oil, **characterized in that** the aerated product comprises

   (i) at least one salt; and
   (ii) at least one sucrose ester;
   wherein the aerated product comprises no more than 5% by weight of the aerated product of sucrose ester;
   wherein the liquid oil is liquid at 20°C/1 atmosphere;
   wherein the aerated product is a food product,
   wherein the liquid oil comprises less than 30%, preferably less than 25%, most preferably less than 20% by weight of the liquid oil of saturated fatty acid,
   wherein the product is in the form of an oil-in-water emulsion, and
   wherein the at least one sucrose ester dissolves in water at 80 degrees centigrade.

2. An aerated product according to claim 1 wherein the aerated product comprises no more than 2% by weight of the aerated product of sucrose ester.

3. An aerated product according to claim 1 or claim 2 not comprising a solid oil, wherein the solid oil is solid at 25°C/1 atmosphere, preferably 20°C/1 atmosphere.

4. An aerated product according to any one of the preceding claims, comprising up to 99.5 wt-%, preferably 5 - 99.5w wt-% of water, based on the total weight of the aerated product.

5. An aerated product according to any one of the preceding claims, wherein the oil is vegetable, animal, mineral or synthetic.

6. An aerated product according to any one of the preceding claims, wherein the oil can be chosen from the group consisting of sunflower oil, olive oil, soybean oil, rapeseed oil, silicone oil as well as mixtures fractions thereof.

7. An aerated product according to any one of the preceding claims, comprising at least 0.01 wt-%, preferably 0.01 wt-% to 80 wt-%, based on the total weight of the aerated product, of at least one liquid oil.

8. An aerated product according to any one of the preceding claims, wherein the salt is chosen from the group consisting of inorganic salts comprising halogen anions or phosphate ions.

9. An aerated product according to any one of the preceding claims, comprising at least 0.005 wt-%, preferably 0.005 to 5 wt-%, based on the total weight of the aerated product, of at least one salt.

10. An aerated product according to any one of the preceding claims, wherein, the sucrose ester is chosen from the group consisting of sucrose stearate, sucrose palmitate, mono-, di-esters and poly-esters of sucrose with higher fatty acids.

11. An aerated product according to any one of the preceding claims, comprising at up to 50 wt-%, based on the total weight of the aerated product, of at least one further ingredient.

12. An aerated product according to any one of the preceding claims, having an overrun of at least 10 %.

13. An aerated product according to any one of the preceding claims, having an overrun of less than 400 %.

14. An aerated product according to any one of the preceding claims which is a frozen aerated food product.

15. A process of production of an aerated product according to any one of the preceding claims where the oil, water and sucrose ester are emulsified prior to adding the salt.

**Patentansprüche**

1. Geschäumtes Produkt, das Wasser und wenigstens ein flüssiges Öl umfasst, **dadurch gekennzeichnet, dass** das geschäumte Produkt umfasst:

   (i) wenigstens ein Salz und
   (ii) wenigstens einen Saccharoseester;
   wobei das geschäumte Produkt nicht mehr als 5 Gew.-%, bezogen auf das geschäumte Produkt, Saccharoseester umfasst;
   wobei das flüssige Öl bei 20 °C/1 Atmosphäre flüssig ist;
   wobei das geschäumte Produkt ein Nahrungsmittelprodukt ist,
   wobei das flüssige Öl weniger als 30 Gew.-%, vorzugsweise weniger als 25 Gew.-%, am bevorzugtesten weniger als 20 Gew.-%, bezogen auf das flüssige Öl, gesättigte Fettsäure umfasst,
   wobei das Produkt in der Form einer Öl-in-Wasser-Emulsion ist und
   wobei der wenigstens eine Saccharoseester sich in Wasser mit 80 °C löst.

2. Geschäumtes Produkt gemäß Anspruch 1, wobei das geschäumte Produkt nicht mehr als 2 Gew.-%, bezogen auf das geschäumte Produkt, Saccharoseester umfasst.

3. Geschäumtes Produkt gemäß Anspruch 1 oder Anspruch 2, das kein festes Öl umfasst, wobei das feste Öl bei 25 °C/1 Atmosphäre, vorzugsweise 2 °C/1 Atmosphäre, fest ist.

4. Geschäumtes Produkt gemäß einem der vorangehenden Ansprüche, das bis zu 99,5 Gew.-%, vorzugsweise 5 bis 99,5 Gew.-%, Wasser, bezogen auf das Gesamtgewicht des geschäumten Produkts, umfasst.

5. Geschäumtes Produkt gemäß einem der vorangehenden Ansprüche, wobei das Öl vegetabil, tierisch, mineralisch oder synthetisch ist.

6. Geschäumtes Produkt gemäß einem der vorangehenden Ansprüche, wobei das Öl aus der Gruppe, bestehend aus Sonnenblumenöl, Olivenöl, Sojabohnenöl, Rapssamenöl, Silikonöl sowie Mischungsfraktionen davon, ausgewählt sein kann.

7. Geschäumtes Produkt gemäß einem der vorangehenden Ansprüche, das wenigstens 0,01 Gew.-%, vorzugsweise 0,01 Gew.-% bis 80 Gew.-%, bezogen auf das Gesamtgewicht des geschäumten Produkts, wenigstens eines flüssigen Öls umfasst.

8. Geschäumtes Produkt gemäß einem der vorangehenden Ansprüche, wobei das Salz aus der Gruppe, bestehend aus anorganischen Salzen, die Halogenanionen oder Phosphationen umfassen, ausgewählt ist.

9. Geschäumtes Produkt gemäß einem der vorangehenden Ansprüche, das wenigstens 0,005 Gew.-%, vorzugsweise 0,005 bis 5 Gew.-%, bezogen auf das Gesamtgewicht des geschäumten Produkts, wenigstens eines Salzes umfasst.

10. Geschäumtes Produkt gemäß einem der vorangehenden Ansprüche, wobei der Saccharoseester aus der Gruppe, bestehend aus Saccharosestearat, Saccharosepalmitat, Mono-, Diestern und Polyestern von Saccharose mit höheren Fettsäuren, ausgewählt ist.

11. Geschäumtes Produkt gemäß einem der vorangehenden Ansprüche, das bis zu 50 Gew.-%, bezogen auf das Gesamtgewicht des geschäumten Produkts, wenigstens eines weiteren Ingrediens umfasst.

12. Geschäumtes Produkt gemäß einem der vorangehenden Ansprüche, das einen Aufschlag von wenigstens 10 % hat.

13. Geschäumtes Produkt gemäß einem der vorangehenden Ansprüche, das einen Aufschlag von weniger als 400 % hat.

14. Geschäumtes Produkt gemäß einem der vorangehenden Ansprüche, welches ein gefrorenes geschäumtes Nahrungsmittelprodukt ist.

15. Verfahren zur Herstellung eines geschäumten Produktes gemäß einem der vorangehenden Ansprüche, wobei das Öl, Wasser und der Saccharoseester vor dem Zugeben des Salzes emulgiert werden.

**Revendications**

1. Produit aéré comprenant de l'eau et au moins une huile liquide, **caractérisé en ce que** le produit aéré comprend

   (i) au moins un sel ; et
   (ii) au moins un ester de saccharose ;
   le produit aéré ne comprenant pas plus de 5 % en poids du produit aéré d'ester de saccharose ;
   l'huile liquide étant liquide à 20°C/1 atmosphère ;
   le produit aéré étant un produit alimentaire ;
   l'huile liquide ne comprenant moins de 30 %, de préférence moins de 25 %, idéalement moins de 20 % en poids de l'huile liquide d'un acide gras saturé ;
   le produit étant sous la forme d'une émulsion huile dans l'eau ; et
   l'au moins un ester de saccharose se dissolvant dans l'eau à 80°C.

2. Produit aéré selon la revendication 1, le produit aéré ne comprenant pas plus de 2 % en poids du produit aéré d'ester de saccharose.

3. Produit aéré selon la revendication 1 ou la revendication 2 ne comprenant pas d'huile solide, l'huile solide étant solide à 25°C/1 atmosphère, de préférence à 20°C/1 atmosphère.

4. Produit aéré selon l'une quelconque des revendications précédentes, comprenant jusqu'à 99,5 % en poids, de préférence de 5 à 99,5 % en poids d'eau, en fonction du poids total du produit aéré.

5. Produit aéré selon l'une quelconque des revendications précédentes, dans lequel l'huile est une huile végétale, animale, minérale ou synthétique.

6. Produit aéré selon l'une quelconque des revendications précédentes, dans lequel l'huile peut être choisie dans le groupe constitué par l'huile de tournesol, l'huile d'olive, l'huile de soja, l'huile de colza, une huile de silicone, ainsi que des fractions de mélanges de celles-ci.

7. Produit aéré selon l'une quelconque des revendications précédentes, comprenant au moins 0,01 % en poids, de préférence de 0,01 % en poids à 80 % en poids, en fonction du poids total du produit aéré, d'au moins une huile liquide.

8. Produit aéré selon l'une quelconque des revendications précédentes, dans lequel le sel est choisi dans le groupe constitué par les sels inorganiques comprenant les anions halogénés ou les ions phosphates.

9. Produit aéré selon l'une quelconque des revendications précédentes, comprenant au moins 0,005 % en poids, de préférence de 0,005 à 5 % en poids, en fonction du poids total du produit aéré, d'au moins un sel.

10. Produit aéré selon l'une quelconque des revendications précédentes, dans lequel l'ester de saccharose est choisi dans le groupe constitué par le stéarate de saccharose, le palmitate de saccharose, les mono-, di-esters et poly-esters de saccharose avec des acides gras supérieurs.

11. Produit aéré selon l'une quelconque des revendications précédentes, comprenant jusqu'à 50 % en poids, en fonction du poids total du produit aéré, d'au moins un autre ingrédient.

12. Produit aéré selon l'une quelconque des revendications précédentes, ayant un foisonnement d'au moins 10 %.

13. Produit aéré selon l'une quelconque des revendications précédentes, ayant un foisonnement de moins de 400 %.

14. Produit aéré selon l'une quelconque des revendications précédentes, qui est un produit alimentaire aéré congelé.

15. Procédé de production d'un produit aéré selon l'une quelconque des revendications précédentes, dans lequel l'huile, l'eau et l'ester de saccharose sont émulsifiés avant l'ajout du sel.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1212947 A